# EUROPÄISCHE PATENTSCHRIFT

(11) **EP 3 509 787 B1**
(45) Veröffentlichungstag und Bekanntmachung des Hinweises auf die Patenterteilung: **10.05.2023**
(21) Anmeldenummer: 17761859.2
(22) Anmeldetag: 31.08.2017
(51) Int. Cl.: B23Q 3/06, B23Q 3/18

(54) **WERKZEUGMASCHINE MIT EINER SPANNVORRICHTUNG UND VERFAHREN**
MACHINE TOOL COMPRISING A CLAMPING DEVICE AND METHOD
MACHINE-OUTIL DOTÉE D'UN DISPOSITIF DE SERRAGE ET PROCÉDÉ

(30) Priorität: 09.09.2016 DE 102016117015
(43) Veröffentlichungstag der Anmeldung: 17.07.2019
(73) Patentinhaber: Alfing Kessler Sondermaschinen GmbH, 73433 Aalen (DE)
(72) Erfinder: KRIEGER, Manfred, 73574 Iggingen (DE); BAIER, Christian, 73466 Röttingen (DE); STREICHER, Thomas, 73434 Aalen (DE); BELLAN, Armin, 91626 Schopfloch (DE); MAIER, Andreas, 73087 Bad Boll (DE); KRAUS, Bastian, 73491 Neuler (DE)
(74) Vertreter: Patentanwälte Bregenzer und Reule Partnerschaftsgesellschaft mbB
(86) Internationale Anmeldenummer: PCT/EP2017/071865
(87) Internationale Veröffentlichungsnummer: WO 2018/046386

(56) Entgegenhaltungen:
- EP-A2- 2 554 325
- DE-A1- 19 900 292
- JP-A- 2001 105 259

## Beschreibung

Die Erfindung betrifft eine Werkzeugmaschine gemäß dem Oberbegriff des Anspruchs 1.

Eine derartige Werkzeugmaschine ist in DE 199 00 292 A1 erläutert.

Werkstücke, insbesondere Pleuel oder andere Motorbauteile, müssen in der Regel mit hoher Präzision bearbeitet werden. Beispielsweise müssen Bohrungen mit hoher Genauigkeit angebracht werden. Daher ist es üblich, dass Motorbauteile, insbesondere Pleuel, bei der Einbringung und Nachbearbeitung von Aufnahmen, zum Beispiel Bohrungen zur Lagerung an einer Kurbelwelle oder dergleichen, anhand einer Positionierantriebsanordnung quer zu der Bearbeitungsachse, also der Längsachse der Bohrung, positioniert werden und seitlich abgestützt sind. Zusätzlich werden die Werkstücke, beispielsweise Pleuel, an ihren Frontseiten (Rückseite und Vorderseite) durch Spannflächen fixiert und aufgespannt, sodass die Bohrung in dem Pleuel oder sonstigen Motorbauteil mit hoher Präzision eingebracht oder nachbearbeitet werden kann. Modernere Verbrennungsmotoren erfordern jedoch Leichtbau und dementsprechend filigrane Motorbauteile, welche höchste Anforderungen an die Spannvorrichtung stellen, damit die Bearbeitung anhand des Bearbeitungswerkzeugs die notwendige Präzision hat.

Es ist daher die Aufgabe der vorliegenden Erfindung, eine Werkzeugmaschine zur präzisen Werkstückbearbeitung von Werkstücken, insbesondere Motorbauteilen, vorzugsweise Pleueln, bereitzustellen.

Zur Lösung der Aufgabe ist eine Werkzeugmaschine gemäß der technischen Lehre des Anspruchs 1 vorgesehen.

Zur Lösung der Aufgabe ist ferner ein Verfahren gemäß der technischen Lehre des Anspruchs 15 vorgesehen.

Zweckmäßigerweise ist vorgesehen, dass die die Aufnahme begrenzende Seitenwand unbeeinträchtigt durch die mindestens eine Seitenwand-Positionierfläche quer zu der Bearbeitungsachse beweglich und/oder verformbar ist, wenn das Bearbeitungswerkzeug in die Aufnahme eindringt.

Das Grundkonzept der vorliegenden Erfindung sieht vor, dass die Seitenwand, welche die Aufnahme seitlich begrenzt, also beispielsweise eine Umfangswand darstellt, von der Abstützung durch die Seitenwand-Positionierfläche freikommt, und nicht in Richtung der Bearbeitungsachse durch eine Seitenwand-Positionierfläche abgestützt ist, sodass sie sich bei der Bearbeitung durch das Bearbeitungswerkzeug verformen oder bewegen oder beides kann. Die Seitenwand oder Umfangswand ist ganz oder im Wesentlichen spannungsfrei.

Die Seitenwand oder Umfangswand des Werkstücks, die von der mindestens einen Seitenwand-Positionierfläche abgestützt ist, ist zweckmäßigerweise im Wesentlichen rund oder bogenförmig.

Bei der Seitenwand handelt es sich beispielsweise um eine Umfangswand, die die Aufnahme ganz oder teilweise begrenzt. Die Seitenwand ist vorzugsweise ringförmig oder kreisförmig. Vorzugsweise erstreckt sich die Seitenwand um einen Winkelbereich um die Aufnahme herum von mindestens 180°, vorzugsweise mindestens 220°.

Bevorzugt ist die Werkzeugmaschine zur Bearbeitung von als Motorbauteilen oder insbesondere Pleueln ausgestalteten Werkstücken ausgestaltet und/vorgesehen.

Insbesondere ist die durch das Bearbeitungswerkzeug herzustellende oder zu bearbeitende Aufnahme des Werkstücks an einem sogenannten kleinen Auge eines Pleuels vorgesehen oder durch das kleine Auge gebildet.

Bei der Bearbeitung durch das Bearbeitungswerkzeug ist das Werkstück zweckmäßigerweise im Bereich der Aufnahme nur durch die Rückseitenspannfläche und die Vorderseitenspannfläche gespannt. Insbesondere ist es vorteilhaft, wenn im Bereich der Aufnahme keine seitlich angreifende Seiten-Positionierfläche im Eingriff oder Kontakt mit dem Werkstück ist.

Die Werkzeugmaschine kann einen Bestandteil eines Bearbeitungszentrums bilden, bei dem weitere Bearbeitungsschritte an dem Werkstück möglich sind, beispielsweise eine Feinbearbeitung der Aufnahme oder Bohrung und/oder eine Nachbearbeitung der Bohrung. Weiterhin ist es möglich, dass beispielsweise das Werkstück im Rahmen dieses Bearbeitungszentrums oder durch das Bearbeitungszentrum gecrackt wird, also zum Beispiel eine Bruchtrennung vorgenommen wird. Diese Bruchtrennung findet vorzugsweise vor der erfindungsgemäßen Aufspannung und Bearbeitung statt.

Möglich ist es, dass die Seitenwand oder Umfangswand nach dem Entfernen der mindestens einen Seitenwand-Positionierfläche durch rückseitig und stirnseitig an der Umfangswand oder Seitenwand angreifende Rückseitenspannflächen oder Vorderseitenspannflächen gehalten wird. Zweckmäßigerweise ist jedoch vorgesehen, dass keine Rückseitenspannfläche und Vorderseitenspannfläche im Bereich der Seitenwand des Werkstücks vorgesehen ist. Somit ist die Seitenwand sozusagen frei beweglich, d.h. auch nicht durch eine stirnseitige oder rückseitige Aufspannung an ihrer Beweglichkeit gehindert.

Vorzugsweise ist vorgesehen, dass sich die Seitenwand ganz oder im wesentlichen frei bei der Einwirkung des Bearbeitungswerkzeugs auf das Werkstück bewegen kann, ohne dass sie durch irgendwelche Positionierflächen oder Spannflächen an dieser Bewegung gehindert ist.

Die mindestens eine Seitenwand-Positionierfläche bildet vorzugsweise einen Bestandteil einer Seitenwand-Positionierflächenanordnung mit einer ersten Seitenwand-Positionierfläche und mindestens einer zweiten Seitenwand-Positionierfläche, die winkelig zueinander stehen. Bevorzugt ist eine V-förmige oder prismatische Aufnahme, die von den Seitenwand-Positionierflächen begrenzt wird. Somit können die Seitenwand-Positionierflächen das Werkstück, beispielsweise das Pleuel, beispielsweise V-förmig oder prismatisch seitlich für die Positionierung des Werkstücks relativ zu der Bearbeitungsachse abstützen.

Zwischen den Seitenwand-Positionierflächen, beispielsweise zwischen der ersten Seitenwand-Positionierfläche und der zweiten Seitenwand-Positionierfläche, ist zweckmäßigerweise in der Positionierstellung ein Abstand vorhanden, in den sich das Werkstück frei hinein erstrecken kann.

Ohne weiteres ist es möglich, dass nicht nur zwei, sondern auch weitere Seitenwand-Positionierflächen vorhanden sind, sodass beispielsweise die Seitenwand U-förmig abgestützt ist, zweckmäßigerweise an drei zu einander beabstandeten und zueinander winkeligen Seiten.

Zweckmäßig ist es, wenn exakt zwei Seitenwand-Positionierflächen zur Abstützung der Seitenwand des Werkstücks vorgesehen sind. Es ist aber auch möglich, dass mindestens zwei Seitenwand-Positionierflächen, d.h. weitere Seitenwand-Positionierflächen vorgesehen sind. Zum Beispiel ist es möglich, dass die Seitenwand-Positionierflächen die Seitenwand, die die Aufnahme spätestens im bearbeiteten Zustand des Werkstücks begrenzt, im wesentlichen umfangsseitig abstützen, bevor sie von der Positionierantriebsanordnung in die Freigabestellung verstellt und das Werkstück bearbeitet wird.

Bevorzugt ist es, wenn eine oder mehrere Seitenwand-Positionierflächen durch jeweils einen Positionierantrieb aus der Positionierstellung in die Freigabestellung verstellbar sind. So ist es beim vorigen Ausführungsbeispiel mit zwei Seitenwand-Positionierflächen zweckmäßig, wenn die erste Seitenwand-Positionierfläche durch einen ersten Positionierantrieb und die zweite Seitenwand-Positionierfläche durch einen zweiten Positionierantrieb unabhängig vom ersten Positionierantrieb zwischen der Freigabestellung und der Positionierstellung verstellbar sind. Beispielsweise ist es möglich, dass jeder der Positionierantriebe in diesem Fall ein Linearantrieb ist, was ein besonders günstiges Antriebskonzept darstellt. Wenn mehr als zwei, beispielweise drei oder vier, Seitenwand-Positionierflächen vorgesehen sind, ist es vorteilhaft, wenn jede Seitenwand-Positionierfläche durch einen individuellen Positionierantrieb zwischen der Freigabestellung und der Positionierstellung verstellbar ist.

Es ist aber auch möglich, dass mehrere oder alle die Seitenwand des Werkstücks abstützenden oder zu deren Abstützung vorgesehene Seitenwand-Positionierflächen an einem einzigen oder gemeinsamen Positionierkörper angeordnet sind. Beispielweise kann dieser Positionierkörper dann durch einen einzigen Positionierantrieb, beispielsweise einen Linearantrieb oder Schwenkantrieb, zwischen der Freigabestellung und der Positionierstellung verstellbar sein.

Bevorzugt ist es, wenn die Seitenwand-Positionierflächen oder die mindestens eine Seitenwand-Positionierfläche die Seitenwand punktförmig oder streifenförmig abstützt bzw. zu einer derartigen Abstützung vorgesehen und ausgestaltet ist.

Der mindestens eine Positionierantrieb ist oder umfasst beispielsweise einen elektromotorischen Antrieb, einen fluidischen Antrieb, insbesondere einen pneumatischen oder hydraulischen Antrieb.

Bei fluidischen Antrieben ist es besonders einfach möglich, dass mehrere oder mindestens zwei Positionierantriebe, zum Beispiel der mindestens eine Positionierantrieb für die mindestens eine Seitenwand-Positionierfläche und/oder der später noch erläuterte Zustell-Positionierantrieb und/oder Quer-Positionierantrieb an eine gemeinsame Fluid-Quelle angeschlossen sind und/oder simultan angesteuert werden. Sowohl ein fluidischer Antrieb als auch ein elektrischer Antrieb können nämlich gleichzeitig durch die Steuerung angesteuert werden.

Es ist möglich, dass nur eine der Seitenwand-Positionierflächen durch die Positionierantriebsanordnung betätigbar ist. Zweckmäßigerweise ist jedoch vorgesehen, dass alle Seitenwand-Positionierflächen oder mindestens zwei Seitenwand-Positionierflächen durch die Positionierantriebsanordnung von der Positionierstellung in die Freigabestellung verstellbar sind.

Ein bevorzugtes Konzept sieht vor, dass die Positionierantriebsanordnung einen Schwenkantrieb zum Verschwenken der mindestens einen Seitenwand-Positionierfläche oder aller Seitenwand-Positionierflächen zwischen der Freigabestellung und der Positionierstellung aufweist.

Vorteilhaft kann aber auch ein Linearantrieb zum linearen Verstellen der mindestens einen Seitenwand-Positionierfläche zwischen der Freigabestellung und der Positionierstellung vorgesehen sein. Ohne weiteres ist auch eine Kombination möglich, d.h. dass die Positionierantriebsanordnung einen Linearantrieb und einen Schwenkantrieb aufweist.

Zweckmäßigerweise ist vorgesehen, dass die Positionierantriebsanordnung mindestens einen Zustell-Positionierantrieb, beispielsweise einen Linearantrieb oder Schwenkantrieb, zum Positionieren des Werkstücks zu der mindestens einen Seitenwand-Positionierfläche hin aufweist. Vorteilhafterweise ist dabei vorgesehen, dass der Zustell-Positionierantrieb der mindestens einen Seitenwand-Positionierfläche gegenüberliegt. Der mindestens eine Zustell-Positionierantrieb und die mindestens eine Seitenwand-Positionierfläche sind beispielsweise an einander entgegengesetzten Seiten einer Werkstückaufnahme angeordnet. Der mindestens eine Zustell-Positionierantrieb ist beispielsweise ein elektromotorischer oder fluidischer Antrieb, insbesondere ein pneumatischer oder hydraulischer Antrieb.

Bevorzugt wirkt der Zustell-Positionierantrieb an einer Seitenfläche auf das Werkstück ein. Es ist aber auch möglich, dass der Zustell-Positionierantrieb an anderer Stelle als an einer Seitenwand oder Seitenfläche des Werkstücks an diesem angreift, beispielsweise in eine am Werkstück vorgesehene Bohrung oder die bereits erwähnte Aufnahme eingreift und so das Werkstück zu der mindestens einen Seitenwand-Positionierfläche hin verstellt bzw. positioniert.

Bevorzugt ist es, wenn der Zustell-Positionierantrieb im Bereich eines großen Auges oder einem von der Aufnahme entfernten Längsendbereich des Werkstücks auf das Werkstück in Richtung der mindestens einen Seitenwand-Positionierfläche wirkt.

Weiterhin vorteilhaft ist es, wenn der Zustell-Positionierantrieb anhand einer Federanordnung federnd nachgiebig auf das Werkstück einwirkt. Beispielsweise ist zwischen einem Abtrieb des Positionierantriebs und einer Anlagefläche, welche zum Kontakt mit dem Werkstück vorgesehen ist, eine Blattfeder, eine Schraubenfeder oder dergleichen vorgesehen.

Der Zustell-Positionierantrieb kann beispielsweise direkt entlang einer Stellachse auf das Werkstück einwirken. Die Stellachse verläuft zweckmäßigerweise längsmittig des Werkstücks. Es ist aber auch möglich, dass der Zustell-Positionierantrieb seitlich neben der Stellachse am Werkstück angreift, insbesondere symmetrisch an einander entgegengesetzten Seiten der Stellachse auf das Werkstück einwirkt.

Bevorzugt ist es, wenn zunächst die mindestens eine Seitenwand-Positionierfläche in die gewünschte Position relativ zu der Bearbeitungsachse verstellt ist, sodass sie zur Abstützung des Werkstücks bereitsteht, und dann erst die Steuerung die Positionierantriebsanordnung derart ansteuert, dass der mindestens eine Zustell-Positionierantrieb das Werkstück zu der bereitstehenden Seitenwand-Positionierfläche hin verstellt. Der Vorteil dieses Konzepts ist es, dass die Seitenwand-Positionierfläche sozusagen die Position der Aufnahme oder der herzustellenden Aufnahme des Werkstücks relativ zu der Bearbeitungsachse vorgibt, so dass das Werkstück durch den mindestens einen Zustell-Positionierantrieb in die korrekte Lage bezüglich der Bearbeitungsachse verstellbar ist. Dann wird die Spannantriebsanordnung aktiv und verstellt die mindestens eine Vorderseitenspannfläche und die mindestens eine Rückseitenspannfläche in die Spannstellung, sodass das Werkstück zwischen den beiden stirnseitig wirkenden Spannflächen gehalten ist. Schließlich steuert die Steuerung die Positionierantriebsanordnung derart an, dass zumindest die mindestens eine Seitenwand-Positionierfläche von dem Werkstück entfernt ist.

Bevorzugt ist vorgesehen, dass die Steuerung auch den Zustell-Positionierantrieb in Richtung einer von dem Werkstück entfernten Freigabestellung ansteuert, wenn die an der Vorderseite und Rückseite angreifenden Vorderseitenspannflächen und Rückseitenspannflächen das Werkstück für die Bearbeitung durch das Bearbeitungswerkzeug spannen und halten.

Es ist aber auch möglich, dass beispielsweise die mindestens eine Seitenwand-Positionierfläche durch den sie ansteuernden Positionierantrieb das Werkstück in Richtung einer Anschlagfläche oder Anlagefläche positioniert, das heißt dass sozusagen die Seitenwand-Positionierfläche und deren Positionierantrieb Bestandteile eines Zustell-Positionierantriebs bilden. Die Anschlagfläche oder Anlagefläche kann zum Beispiel ortsfest an einem Werkstückhalter vorgesehen sein.

Der Positionierantrieb zum Antreiben der mindestens einen Seitenwand-Positionierfläche dient also zum aktiven Ausrichten und/oder Positionieren des Werkstücks bezüglich der Bearbeitungsachse.

Vorteilhaft ist weiterhin, wenn die Werkzeugmaschine oder die Spanneinrichtung mindestens eine Quer-Positionierfläche zum Positionieren des Werkstücks quer zu der Bearbeitungsachse in einem Abstand zu der Seitenwand und/oder der Aufnahme des Werkstücks aufweist. Die mindestens eine Quer-Positionierfläche ist zum Beispiel im Bereich eines großen Auges des Werkstücks oder einer weiteren Lagerbohrung oder Aufnahme vorgesehen. Bevorzugt ist es, wenn die mindestens eine Quer-Positionierfläche sich parallel zu der bereits erläuterten Stellachse des Zustell-Positionierantriebs erstreckt.

Die mindestens eine Quer-Positionierfläche kann einen Bestandteil einer Paarung gegenüberliegender Quer-Positionierflächen bilden, zwischen denen das Werkstück zumindest zum Zwecke der Positionierung bezüglich der Bearbeitungsachse gehalten ist. Eine oder beide der Quer-Positionierflächen, jedenfalls mindestens eine Quer-Positionierfläche kann bezüglich einer Maschinenbasis oder eines Maschinenbetts oder eines Werkstückhalters der Werkzeugmaschine ortsfest sein oder auch beweglich gelagert sein. Für mindestens eine beweglich gelagerte Quer-Positionierfläche ist zweckmäßigerweise ein Quer-Positionierantrieb vorgesehen, der die Quer-Positionierfläche zwischen einer das Werkstück haltenden oder positionierenden Positionierstellung und einer das Werkstück freigebenden, also beispielsweise von einer gegenüberliegenden Quer-Positionierfläche entfernten Freigabestellung antreiben kann.

Eine Querpositionierung kann ohne weiteres nicht nur von seitlich außen an dem Werkstück erfolgen, sondern beispielsweise auch in einer Aufnahme, Bohrung oder dergleichen. So kann die Quer-Positionierfläche beispielsweise zum Eingriff in ein sogenanntes großes Auge eines Pleuels vorgesehen sein. Ohne weiteres können mehrere Quer-Positionierflächen in eine derartige Aufnahme, beispielsweise das große Auge, eingreifen und so das Werkstück abseits der Aufnahme, die durch das Bearbeitungswerkzeug bearbeitet wird, und abseits der durch die mindestens eine Seiten-Positionierfläche unbelasteten Seitenwand positionieren und/oder halten.

Mindestens einer der Positionierantriebe der Positionierantriebsanordnung weist zweckmäßigerweise einen verstellbaren Anschlag auf und/oder ist in Relation zu der Bearbeitungsachse verstellbar bezüglich eines Maschinenbetts oder Maschinenbasis der Werkzeugmaschine verstellbar festlegbar angeordnet. So kann zum Beispiel anhand dieses Anschlags oder des verstellbaren Positionierantriebs die jeweilige Positionierfläche, die durch den Positionierantrieb verstellbar ist, bezüglich der Bearbeitungsachse eingestellt werden.

Ein bevorzugtes Konzept sieht vor, dass die Spannvorrichtung mindestens eine Paarung oder exakt eine Paarung bestehend aus Rückseitenspannfläche und Vorderseitenspannfläche zum Spannen des Werkstücks im Bereich der Aufnahme des Werkstücks oder unmittelbar an der Aufnahme des Werkstücks an einem der Seitenwand gegenüberliegenden Abschnitt des Werkstücks aufweist. Bevorzugt ist es dabei, wenn das Werkstück sozusagen direkt an der Aufnahme durch mindestens eine oder exakt eine derartige Paarung gespannt ist, sodass es sozusagen unmittelbar neben der Seitenwand, die die Aufnahme begrenzt, gespannt und gehalten ist, die Seitenwand selbst jedoch beweglich bleibt. Es versteht sich, dass eine oder mehrere derartige Paarungen bestehend aus Rückseitenspannfläche und Vorderseitenspannfläche vorgesehen sein können. Wenn exakt eine Paarung bestehend aus Rückseitenspannfläche und Vorderseitenspannfläche an dem der Seitenwand gegenüberliegenden Abschnitt des Werkzeugs vorgesehen ist, ist es vorteilhaft, wenn diese Paarung zentral mittig angeordnet ist, d.h. einer Mitte der Seitenwandfläche, welche die Aufnahme begrenzt, gegenüberliegt.

Ein bevorzugtes Konzept sieht vor, dass jeweils eine Rückseitenspannfläche eine Vorderseitenspannfläche unmittelbar gegenüberliegt, insbesondere in einer zu der Bearbeitungsachse parallelen Achse. Somit wird das Werkstück sozusagen zwischen die einander gegenüberliegenden Spannflächen gespannt. Zweckmäßigerweise sind die einer Seite des Werkstücks, beispielweise der Vorderseite oder der Rückseite, zugeordnete Spannflächen ortsfest an einer Halterung vorgesehen.

Insbesondere vorteilhaft ist, wenn die Rückseitenspannflächen an einem Werkstückhalter oder Werkstückblock zum Halten des Werkstücks, insbesondere des Pleuels, ortsfest sind und die stirnseitig angreifenden und wirkenden Vorderseitenspannflächen beweglich.

Die mindestens eine Vorderseitenspannfläche und/oder die mindestens eine Rückseitenspannfläche sind zweckmäßigerweise punktförmig. Insbesondere ist es vorteilhaft, wenn die mindestens eine Vorderseitenspannfläche und die mindestens eine Rückseitenspannfläche eine Querbewegung des Werkstücks quer zu der Bearbeitungsachse während der Bearbeitung durch das Bearbeitungswerkzeug verhindern.

Erwähnt sei, dass sämtliche Antriebe der erfindungsgemäßen Werkzeugmaschine, also beispielsweise die Positionierantriebe oder Spannantriebe oder beide, elektrische Antriebe, fluidische Antriebe, insbesondere pneumatische oder hydraulische Antriebe, oder dergleichen sein können. Die Antriebe können Linearantriebe oder Schwenkantriebe sein. Zwischen einem jeweiligen Antrieb und dem durch den Antrieb betätigten Objekt, beispielsweise einer Spannfläche oder Positionierfläche, kann ein Getriebe angeordnet sein.

Nachfolgend werden Ausführungsbeispiele der Erfindung anhand der Zeichnung erläutert. Es zeigen:
- Figur 1: eine teilweise schematische Ansicht einer Werkzeugmaschine von oben mit einer Spannvorrichtung mit prismatisch an einer Seitenwand eines Werkstücks angreifenden Seitenwand-Positionierflächen, die jeweils durch einen Positionierantrieb angetrieben sind,
- Figur 2: eine Werkzeugmaschine ähnlich derjenigen gemäß Figur 1, jedoch mit einer anderen Spannvorrichtung mit einem einzigen, linear angetriebenen Positionierelement, welches prismatisch angeordnete Sei-tenwand-Positionierflächen aufweist,
- Figur 3: eine Werkzeugmaschine ähnlich derjenigen gemäß Figur 2, jedoch mit einer Spannvorrichtung, deren Positionierelement prismatisch angeordnete Seitenwand-Positionierflächen aufweist und schwenkbar angetrieben ist,
- Figur 4: eine Variante des Werkstücks, insbesondere eines Pleuels, zur Bearbeitung durch die Werkzeugmaschine gemäß vorstehender Figuren von oben und
- Figur 5: eine schematische Seitenansicht der Werkzeugmaschinen gemäß vorstehender Figuren mit vorderseitig und rückseitig an dem Werkstück angreifenden Spannflächen der Spannvorrichtung sowie dem Bearbeitungswerkzeug.

Eine Werkzeugmaschine 10 weist eine Maschinenbasis 12, beispielsweise ein Maschinenbett oder einen sonstigen Grundkörper, mit einer Spannvorrichtung 11 auf, welche zum Spannen eines Werkstücks 80, beispielsweise eines Pleuels 81, also eines Motorbauteils, dient. Das durch die Spannvorrichtung 11 gespannte Motorbauteil oder Pleuel 81, also Werkstück 80, ist durch ein Bearbeitungswerkzeug 60, beispielsweise einen Bohrer, einen Fräskopf, ein Werkzeug zum Honen etc. bearbeitbar.

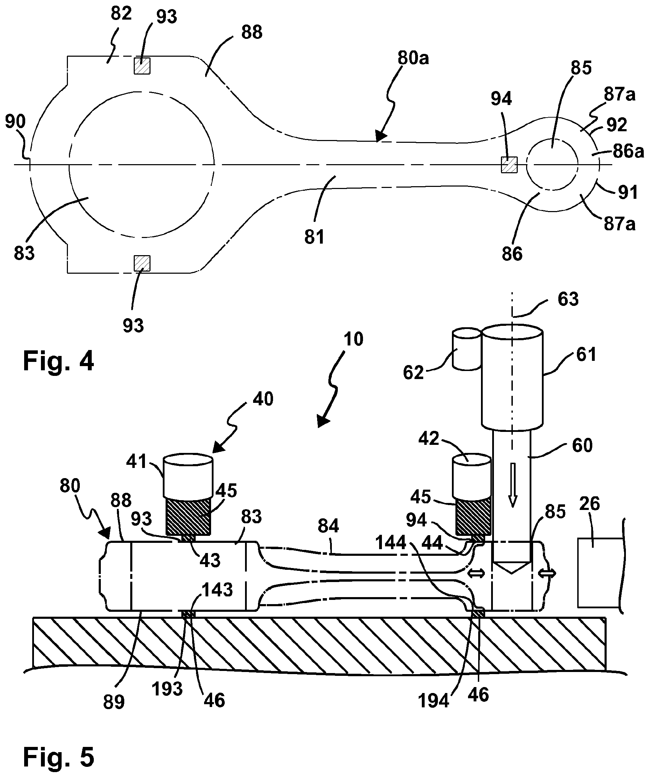

Das Bearbeitungswerkzeug 60 wird beispielsweise durch einen Werkzeugantrieb 61, beispielsweise eine Werkzeugspindel, die in Figur 5 schematisch dargestellt ist, angetrieben. Der Werkzeugantrieb 61 und das Bearbeitungswerkzeug 60 sind durch einen Vorschubantrieb 62 längs einer Bearbeitungsachse 63 längsverstellbar, sodass das Bearbeitungswerkzeug 60 in die nachfolgend noch erläuterte Aufnahme 85 des Werkstücks 80 eindringen und diese bearbeiten kann.

Das Pleuel 81 weist einen Kopfbereich 82 auf, in welchem eine Aufnahme 83, beispielsweise ein sogenanntes großes Auge, vorgesehen ist. Der Kopfbereich 82 ist an einem Längsende eines Pleuelschaftes 84 vorgesehen, an dessen anderem Längsende oder Kopfbereich eine Aufnahme 85 vorgesehen ist. Die Aufnahme 85, beispielsweise ein sogenanntes kleines Auge, ist durch das Bearbeitungswerkzeug 60 bearbeitbar oder herstellbar oder beides. Es kann also vorgesehen sein, dass die Aufnahme 85 bei der nachfolgend beschriebenen Bearbeitung bereits hergestellt ist, durch das Bearbeitungswerkzeug 60 jedoch noch sozusagen verfeinert wird, beispielsweise feingebohrt wird.

An dieser Stelle und keinesfalls beschränkt auf die konkrete Ausgestaltung der Werkzeugmaschine 10 sei erwähnt, dass eine erfindungsgemäße Werkzeugmaschine selbstverständlich auch andere Bearbeitungsschritte vorsehen kann als ein Bohren, nämlich beispielsweise eine Fräsbearbeitung oder dergleichen andere Bearbeitung. Insbesondere ist vorgesehen, dass die Werkzeugmaschine gemäß der Erfindung zu einer Feinbearbeitung oder Nachbearbeitung einer bereits existierenden Aufnahme an einem Werkstück vorgesehen ist.

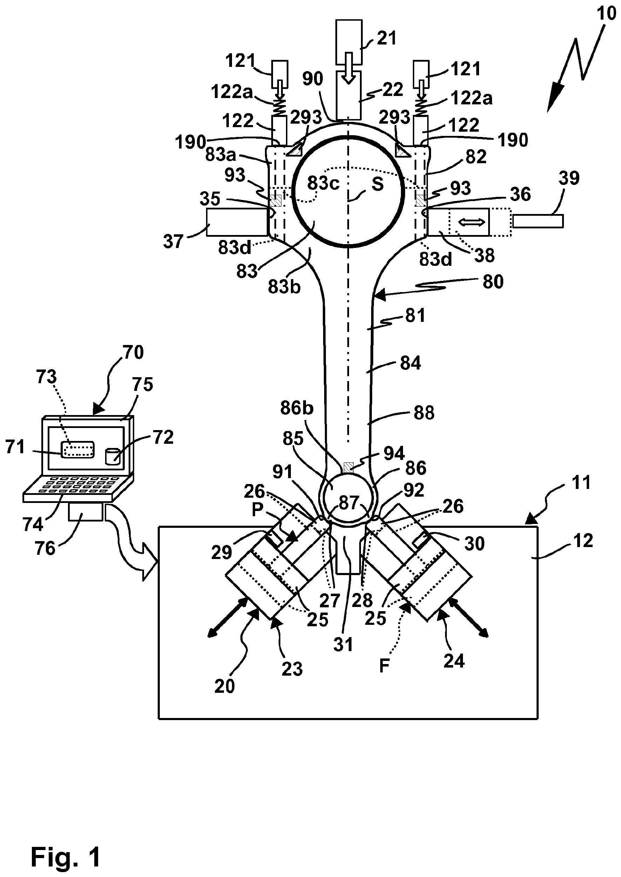

Die Aufnahme 85 ist am freien Endbereich des Werkstücks 80 durch eine Umfangswand oder Seitenwand 86 begrenzt, die erkennbar aus den Figuren 1, 2 und 3 dünn ausfällt. Beispielsweise ist die Seitenwand nur maximal 4 mm, insbesondere maximal 3 mm oder sogar nur 2 mm stark. Zur Veranschaulichung eines in dieser Hinsicht massiveren und somit belastbareren Werkstücks, das selbstverständlich durch die Werkzeugmaschine 10 bearbeitbar ist, ist in Figur 4 ein Werkstück 80a mit einer vergleichsweise massiven Seitenwand 86a dargestellt.

Anhand Positionierantriebsanordnung 20 mit einem Zustell-Positionierantrieb 21 ist das Werkstück 80 relativ zu der Bearbeitungsachse 63 und somit relativ zum Bearbeitungswerkzeug 60 positionierbar, sodass die Aufnahme 85 exakt und mit der gewünschten Genauigkeit in das Werkstück 80 eingebracht werden kann oder, wenn sie schon im Werkstück 80 vorhanden ist, bearbeitbar ist.

Der Zustell-Positionierantrieb 21 wirkt über ein Positionierelement 22 beispielsweise auf Stützfläche 90 ein, die an die Aufnahme 83 begrenzenden Seitenwand des Werkstücks 80 vorgesehen ist. Das Positionierelement 22 betätigt oder verstellt das Werkstück 80 entlang einer Stellachse S zu Seitenwand-Positionierflächen 27, 28, die dem Zustell-Positionierantrieb 21 bzw. dem Positionierelement 22 gegenüberliegen. Das Werkstück 80 wird dadurch im Bereich von Stützabschnitten 87 an der Seitenwand 86 vorgesehenen Stützflächen 91, 92 zu den Seitenwand-Positionierflächen 27, 28 hin verstellt und somit seitlich an zueinander beabstandeten und beispielsweise an Eckpunkten eines Dreiecks vorgesehenen Positionierflächen einerseits am Positionierelement 22 und andererseits an den Seitenwand-Positionierflächen 27, 28 gehalten und relativ zu Bearbeitungsachse 63 positioniert.

Die Seitenwand-Positionierflächen 27, 28 sind an Positionierkörpern 26 vorgesehen, die zwischen einer in durchgezogenen Linien dargestellten Positionierstellung P und einer in gestrichelten Linien dargestellten Freigabestellung F anhand von Positionierantrieben 23, 24 verstellbar sind. Beispielsweise sind die Positionierkörper 26 an Antriebskörpern 25 der Positionierantriebe 23, 24 vorgesehen. Die Antriebskörper 25 sind beispielsweise Spindeln von Mutter-Spindelantrieben, Stangen, die an einem pneumatischen oder elektrischen Linearantrieb vorgesehen sind oder dergleichen. Jedenfalls sind die Positionierkörper 26 angedeutet durch Doppelpfeile in Figur 1 linear zwischen der Positionierstellung P und der Freigabestellung F verstellbar.

Bei dem vorgenannten Positioniervorgang anhand des Zustell-Positionierantriebs 21 sind die Seitenwand-Positionierflächen 27, 28 bereits durch die Positionierantriebe 23, 24 vorpositioniert, also in die Positionierstellung P verstellt und geben somit die Lage des Werkstücks 80 in Bezug auf die Bearbeitungsachse 63 im Bereich der Aufnahme 65 vor.

Es ist aber auch die Möglichkeit gegeben, dass beispielsweise zunächst der Zustell-Positionierantrieb 21 eine Grundposition des Werkstücks 80 vorgibt und anschließend die Positionierantriebe 23, 24 die Seitenwand-Positionierflächen 47, 28 in Anlage mit dem Werkstück 80 bringen, dieses also relativ der Positionierung im Bereich des großen Auges oder der Aufnahme 83 positionieren.

Zwischen den Seitenwand-Positionierflächen 27, 28 ist zweckmäßigerweise ein Abstand 31 vorgesehen, in den hinein sich das Werkstück 80 in der Positionierstellung P erstreckt und in welchem das Werkstück 80 seitlich nicht abgestützt ist.

Vorzugsweise sind den Seitenwand-Positionierflächen 27, 28 Anschläge 29, 30 zugeordnet, um deren Position relativ zu der Bearbeitungsachse 63 zu definieren. Bevorzugt sind die Anschläge 29, 30 einstellbar. Beispielsweise sind die Anschläge 29, 30 an den Positionierantrieben 23, 24 vorgesehen. Es ist zum Beispiel möglich, dass die Positionierantriebe 23, 24 an der Maschinenbasis 12, beispielsweise einem Maschinenbett, oder einem sonstigen Halter zum ortsfesten Halten der Positionierantriebe 23, 24 relativ zu einem Untergrund anhand einer Verstelleinrichtung verstellbar angeordnet sind. Bevorzugt ist jedoch, wenn ein jeweiliger Positionierantrieb 23, 24 einen verstellbaren Anschlag 29, 30 aufweist, beispielsweise um den Bewegungsweg des Antriebskörpers 25 zu der Bearbeitungsachse 63 hin zu begrenzen.

Anstelle eines einzelnen Zustell-Positionierelementes 22 können aber auch mehrere Positionierelemente vorgesehen sein, um das Werkstück 80 in Richtung der Seitenwand-Positionierflächen 27, 28 zu verstellen. So ist es beispielsweise möglich, dass in einem Querabstand zu der Stellachse S einer oder mehrere Positionierelemente 122 vorgesehen sind, beispielsweise zwei Positionierelemente 122 an einander entgegengesetzten Seiten neben der Stellachse S. Bevorzugt ist es, wenn die Positionierelemente 122 auf Stützflächen 190 einwirken, die einen möglichst großen Abstand zu der Stellachse S haben.

Beispielsweise sind die Stützflächen 190 im Bereich von Bohrungen oder Stirnseiten von Bohrungen 83d für Schrauben vorgesehen, mit denen ein Pleueldeckel 83a mit einem Pleuelfuß 83b des Pleuels 81 verschraubbar ist. Es ist auch möglich, dass die Stützflächen 190 von Stirnseiten bereits in die Bohrungen 83d eingeschraubten Schrauben oder Schraubenköpfen bereitgestellt werden. Mithin ist also der Pleueldeckel 83a mit dem Pleuelfuß 83b durch diese in der Zeichnung nicht sichtbaren Schrauben bei diesem Szenario bereits verschraubt. Exemplarisch ist eine Bruchtrennlinie 83c zwischen dem Pleueldeckel 83a und dem Pleuelfuß 83b eingezeichnet. Die Bohrungen 83d erstrecken sich parallel zur Stellachse S.

Die Positionierelemente 122 sind durch Zustell-Positionierantriebe 121 zwischen einer das Werkstück 80 an die Seitenwand-Positionierflächen 27, 28 Anlagestellung und einer eine Entnahme des Werkstücks 80 von der Spannvorrichtung 11 ermöglichenden Entnahmestellung verstellbar. Bevorzugt ist es, wenn die Positionierelemente 122 anhand von Federanordnungen 122a in Richtung der Anlagestellung federbelastet sind. Beispielsweise ist zwischen einem jeweiligen Zustell-Positionierantrieb 121 und einem Positionierelemente 122 eine Feder vorgesehen. Selbstverständlich ist es möglich, dass mindestens zwei der Positionierelemente 22, 122 durch einen gemeinsamen Zustell-Positionierantrieb antreibbar sind. So ist es zum Beispiel möglich, dass zwei oder mehr der Positionierelemente 22 und/oder 122 an einem gemeinsamen Positionierkörper angeordnet sind, der durch einen Zustell-Positionierantrieb, beispielsweise einen Elektromotor, antreibbar ist. An dieser Stelle sei erwähnt, dass Positionierantriebe 21 und/oder 121 beispielsweise Elektromotoren, pneumatische Antriebe, hydraulische Antriebe oder dergleichen umfassen können.

Zur Verbesserung der Lageorientierung des Werkstücks 80 bezüglich der Bearbeitungsachse 83 können optional, das heißt nicht zwingend, weiterhin Quer-Positionierflächen 35, 36 der Spannvorrichtung 11 beitragen, die abseits der Seitenwand-Positionierflächen 27, 28 und somit abseits der Seitenwand 86 oder anders formuliert im Abstand zu der Seitenwand 86 und im Abstand zu den Seitenwand-Positionierflächen 27, 28 das Werkstück 80 positionieren. Die Quer-Positionierflächen 35, 36 sind beispielsweise an Positionierelementen 37, 38 vorgesehen. Das Positionierelement 37 ist beispielsweise ortsfest bezüglich des Werkstückhalters 47 und/oder der Maschinenbasis 12 angeordnet. Das Positionierelement 38 ist durch einen Quer-Positionierantrieb 39 zwischen einer das Werkstück 80 zwischen einer das Werkstück 80 gegen das Positionierelemente 36 bzw. die Quer-Positionierfläche 35 belastenden Positionierstellung (in Figur 1 in durchgezogenen Linien dargestellt) und einer von dem Werkstück 80 entfernten Freigabestellung (in Figur 1 in gestrichelten Linien dargestellt) verstellbar.

Wenn der Zustell-Positionierantrieb 21 und/oder 121 das Werkstück 80 an die Seitenwand-Positionierflächen 27, 28 verstellt hat und zweckmäßigerweise der Quer-Positionierantrieb 39 die Querpositionierung des Werkstücks 80 bezüglich der Bearbeitungsachse 63 und/oder der Stellachse S abgeschlossen hat und somit die Positionierung des Werkstücks 80 bezüglich der Bearbeitungsachse 63 abgeschlossen ist, sorgt eine Spannantriebsanordnung 40 mit Spannantrieben 41, 42 für eine Verspannung des Werkstücks 80, bevor das Bearbeitungswerkzeug 60 in Kontakt mit dem Werkstück 80 kommt.

Die Spannantriebe 41, 42 dienen zum Verstellen von Vorderseitenspannflächen 43, 44 zu Stützflächen 93, 94 des Werkstücks 80 hin oder von diesen Stützflächen weg, die an einer Vorderseite 88 des Werkstücks 80 vorgesehen sind.

Den Vorderseitenspannflächen 43, 44 liegen Rückseitenspannflächen 143, 144 gegenüber. Die Rückseitenspannflächen 143, 144 sind beispielsweise an Stützkörpern 46 vorgesehen, die an der Maschinenbasis 12 und/oder einem Werkstückhalter 47 ortsfest angeordnet sind. Das Werkstück 80 liegt mit Stützflächen 193, 194 an seiner Rückseite 89 auf den Rückseitenspannflächen 143, 144 auf. In der Spannstellung der Spannantriebsanordnung 40 ist das Werkstück 80 im Bereich der Stützflächen 93, 94 und der Stützflächen 193, 194 zwischen die Rückseitenspannflächen 143, 144 und die Vorderseitenspannflächen 43, 44 gespannt.

Zweckmäßig ist es, wenn die Paarungen von Vorderseitenspannflächen 43, 44 und Rückseitenspannflächen 143, 144 im Bereich von Eckpunkten eines Dreiecks oder dreieckförmig angeordnet sind.

Bevorzugt ist es, wenn beispielsweise mindestens oder exakt zwei Paarungen von Vorderseitenspannflächen 43 und Rückseitenspannflächen 143 im Bereich der Aufnahme 83 oder im Kopfbereich 82 vorgesehen sind, also entfernt von der Aufnahme 85. Zweckmäßig sind die Paarungen von Vorderseitenspannflächen 43 und Rückseitenspannflächen 143 nahe bei der Aufnahme 83 vorgesehen, insbesondere in der Nähe der Bohrungen 83d. Zweckmäßig ist es weiterhin, wenn die von der Aufnahme 85 entfernten Paarungen von Vorderseitenspannflächen 43 und Rückseitenspannflächen 143 an einander entgegengesetzten Seiten der Stellachse S vorgesehen sind.

Im Bereich der Aufnahme 85 ist vorzugsweise nur eine einzige Paarung von einer Vorderseitenspannfläche 44 und eine Rückseitenspannfläche 144 vorgesehen. Insbesondere sind diese beiden Spannflächen nicht im Bereich der Seitenwand 86 angeordnet, sondern an einem der Seitenwand 86 gegenüberliegenden Randbereich 86b der Aufnahme 85, insbesondere an einem Fußbereich des Pleuelschafts 84, an welchem die Aufnahme 85 vorgesehen ist.

Es versteht sich, dass alternativ oder ergänzend zu den Stützflächen 93, 94, 193 90, 194 auch andere Stützflächen am Werkstück 80 und in der Zeichnung nicht dargestellte zugeordnete Vorderseitenspannflächen und Rückseitenspannflächen der Spannvorrichtung 11 vorgesehen sein können. Beispielsweise ist es möglich, dass Spannvorrichtung 11 Vorderseitenspannflächen und Rückseitenspannflächen zur Beaufschlagung von Stützflächen 293 und diesen entgegengesetzten, an der Rückseite 89 vorgesehenen und in der Zeichnung nicht dargestellten Stützflächen des Werkstücks 80 aufweist. Die Stützflächen 291 und somit die zugeordneten Spannflächen der Spannvorrichtung 11 sind beispielsweise im Bereich des Pleueldeckels 83a vorgesehen, insbesondere nahe bei den Bohrungen 83d.

Die Seitenwand 86 ist verhältnismäßig dünn. Das nachfolgend erläuterte Konzept sieht vor, dass die Spannvorrichtung 11 die Seitenwand 86 unbelastet und ohne Abstützung belässt, wenn das Bearbeitungswerkzeug 60 in die Aufnahme 83 eindringt oder die Aufnahme 83 herstellt.

Eine Steuerung 70 steuert die Positionierantriebe 23, 24 zu einer Verstellung der Seitenwand-Positionierflächen 27, 28 von dem Werkstück 80 weg an, wenn Spannantriebsanordnung 40 ihre das Werkstück 80 spannende Spannstellung eingenommen hat.

Dabei ist es möglich, dass die Quer-Positionierflächen 35, 36 in der das Werkstück 80 quer zur Stellachse S positionierenden Stellung verbleiben, also in Anlage mit dem Werkstück 80 bleiben. Somit ist das Werkstück 80 quer zur Stellachse S im Abstand zu der Aufnahme 80 abgestützt, wenn das Bearbeitungswerkzeug 60 in die Aufnahme 83 eindringt. Es ist aber auch möglich, dass die Steuerung 70 den Quer-Positionierantrieb 39 zu einem Entfernen der Quer-Positionierfläche 38 von dem Werkstück 80 weg ansteuert, sodass das Werkstück 80 lediglich zwischen die Vorderseitenspannflächen 43, 44 und Rückseitenspannflächen 143, 144 gespannt ist, wenn das Bearbeitungswerkzeug 60 das Werkstück 80 bearbeitet.

In diesem Zusammenhang ist zu erwähnen, dass es vorteilhaft ist, jedoch nicht nötig, dass der Zustell-Positionierantrieb 21 durch die Steuerung 70 vor der Bearbeitung des Werkstücks 80 durch das Bearbeitungswerkzeug 60 zu einer Verstellung des Positionierelementes 22 von dem Werkstück 80 weg angesteuert wird. Somit ist es möglich, dass das Werkstück 80 für die Bearbeitung durch das Werkstück 60 ausschließlich zwischen die Vorderseitenspannflächen 43, 44 und Rückseitenspannflächen 143, 144 gespannt ist. Aber auch bei diesem Szenario ist es möglich, dass das Werkstück 80 bei der Bearbeitung durch das Bearbeitungswerkzeug 60 noch durch die Quer-Positionierflächen 35, 36 abseits der Seitenwand 86 quer zu der Bearbeitungsachse 63 abgestützt ist.

Die Steuerung 70 umfasst beispielsweise einen Prozessor 71 und einen Speicher 72, wobei der Prozessor 71 Programmcode eines Steuerungsprogramms 73 abarbeitet, mit dem die Spannantriebsanordnung 40 und die Positionierantriebsanordnung 20 ansteuerbar ist. Den Instruktionen des Programmcodes folgend oder diese ausführen steuert der Prozessor 71 und somit die Steuerung 70 die Spannantriebsanordnung 40 und die Positionierantriebsanordnung 20 an. Bei der Steuerung 70 handelt es sich beispielsweise um einen Computer, eine Maschinensteuerung oder dergleichen. Die Steuerung 70 umfasst beispielsweise eine Eingabemittel 74, insbesondere eine Tastatur, Maus oder dergleichen sowie ein Ausgabemittel 75 zur Anzeige von Informationen, beispielsweise eines jeweiligen Steuerungszustands oder Einstellungszustands der Werkzeugmaschine 10. Das Programm 73 ist vorzugsweise in dem Speicher 72 speicherbar. Die Steuerung 70 steuert über eine Schnittstelle 76, beispielsweise eine Netzwerk-Schnittstelle, eine USB-Schnittstelle oder eine andere Busschnittstelle die Positionierantriebsanordnung 20 und die Spannantriebsanordnung 40 an. Die Schnittstelle 76 kann aber auch beispielsweise separate Steuerungsleitungen zur individuellen Ansteuerung Beispielweise der Positionierantriebe 23, 24, 39, 21 und/oder der Spannantriebe 41, 41 umfassen oder aufweisen.

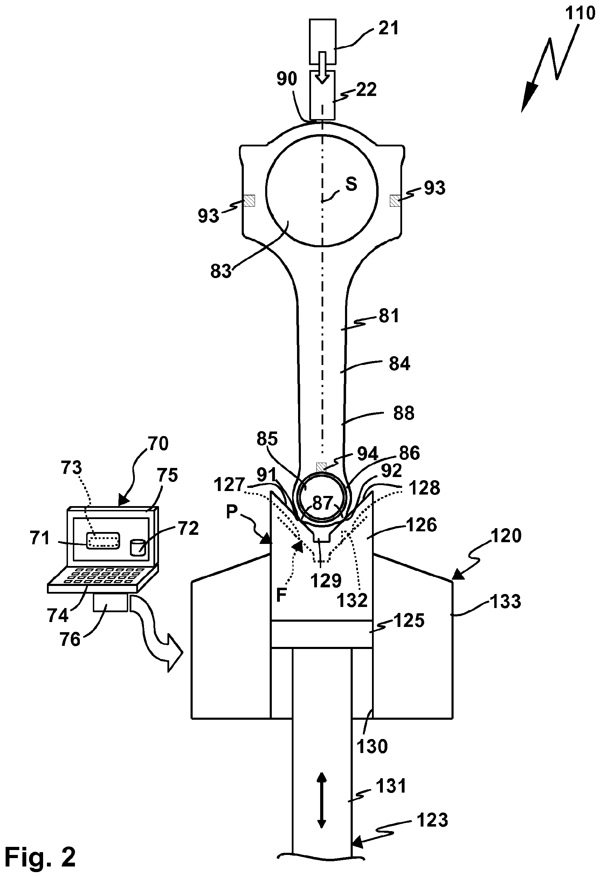

Bei der in Figur 2 dargestellten Werkzeugmaschine 110 sind teilweise dieselben oder gleiche Komponenten vorhanden wie bei der Werkzeugmaschine 10. Aus Gründen der zeichnerischen Vereinfachung sind mehrere Alternativen weggelassen, unter anderem der Quer-Positionierantrieb 39 oder auch die Zustell-Positionierantriebe 121, die ohne weiteres auch bei der Werkzeugmaschine 110 vorhanden sein können.

Bei der Werkzeugmaschine 110 ist anstelle zweier voneinander separater Positionierkörper 26, die individuell durch Positionierantriebe antreibbar sind, ein einziger Positionierkörper 126 vorgesehen, welcher eine Positionierungsaufnahme 132 mit einer V-förmigen Kontur zum Abstützen des Werkstücks 80 aufweist. An der Positionierungsaufnahme 132 sind den Positionierflächen 27, 28 funktional entsprechende Seitenwand-Positionierflächen 127, 128 vorgesehen, welche das Werkstück 80 im Bereich der Stützflächen 91, 92 in einer Positionierstellung P abstützen. Die Seitenwand-Positionierflächen 127, 128 sind schrägwinkelig zur Stellachse S, beispielsweise in einem Winkel von etwa 45°.

Der Positionierkörper 126 ist durch einen Positionierantrieb 123 zwischen der Positionierstellung P (in durchgezogenen Linien dargestellt) und einer Freigabestellung F, in welcher die Seitenwand 86 seitlich nicht abgestützt ist, linear verstellbar. Die Freigabestellung ist lediglich durch eine gestrichelte Darstellung der Positionierungsaufnahme 132 angedeutet.

Beispielsweise hat der Positionierantrieb 123 einen Antriebskörper 125, der in einer Führung 130 eines Führungskörpers 133 linear geführt ist. Am Antriebskörper 125 ist der Positionierkörper 126 angeordnet und vorzugsweise ebenfalls in der Führung 130 linear geführt. Der Antriebskörper 125 ist beispielsweise an einem Abtrieb 131 des Positionierantriebs 121 angeordnet. Der Abtrieb 131 ist beispielsweise stangenförmig. Der Abtrieb 131 ist beispielsweise ein Antriebsvorsprung eines Linearantriebs, insbesondere eines elektrischen, pneumatischen oder hydraulischen oder sonstigen fluidischen Linearantriebs.

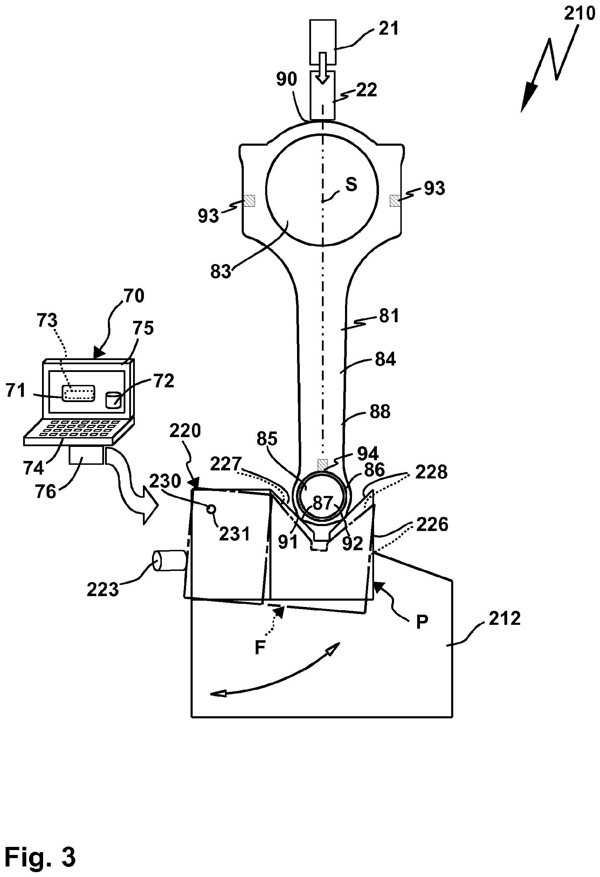

Bei der in Figur 3 schematisch dargestellten Werkzeugmaschine 210 ist anstelle eines Linearantriebs ein Schwenkantrieb vorgesehen, mit welchem ein Positionierkörper 226 zwischen einer die Seitenwand 86 abstützenden Positionierstellung P und einer die Seitenwand 86 freigebenden Freigabestellung F verstellbar ist. Der Positionierkörper 226 weist beispielsweise Seitenwand-Positionierflächen 228, 229 auf, welche funktional und in ihrer Position den Seitenwand-Positionierflächen 27, 28 entsprechen. Der Positionierkörper 226 schwenkt beispielsweise um eine Schwenkachse 231, die durch ein Schwenklager 230 definiert ist. Beispielsweise ist die Schwenkachse oder ist das Schwenklager 230 an einer Maschinenbasis 212 vorgesehen. Der Positionierkörper 226 ist beispielsweise durch einen Schwenkantrieb 223 antreibbar, sodass er um die Schwenkachse 231 schwenkt.

Die Positionierantriebe 123, 223 sind durch die bereits erläuterte Steuerung 70 in der erwähnten Weise ansteuerbar, das heißt dass sie jeweiligen Seitenwand-Positionierflächen 127, 128 bzw. 227, 228 in die Freigabestellung F verstellen, wenn das Bearbeitungswerkzeug 60 in die Aufnahme 83 eindringt oder diese herstellt.

Alle Ausführungsbeispiele zeigen, dass die Seitenwand 86 bei der Bearbeitung des Werkstücks 80 durch das Bearbeitungswerkzeug 60 seitlich frei steht bzw. quer zur Bearbeitungsachse 63 unbelastet ist, was eine exakte Bearbeitung des Werkstücks 80, insbesondere der Aufnahme 83, ermöglicht.

## Patentansprüche

1. Werkzeugmaschine mit einem Werkstück (80), insbesondere einem Motorbauteil oder Pleuel (81), und mit einer Spannvorrichtung (11) für das Werkstück (80) und einem Bearbeitungswerkzeug (60) zur maschinellen Bearbeitung des Werkstücks (80), bei welcher das Bearbeitungswerkzeug (60) entlang einer Bearbeitungsachse (63) in eine Aufnahme (85) des Werkstücks (80) eindringt, welche sich von einer Vorderseite des Werkstücks (80) zu einer Rückseite des Werkstücks (80) erstreckt und durch eine Seitenwand (86) des Werkstücks (80) begrenzt ist, wobei die Spannvorrichtung (11) mindestens eine Seitenwand-Positionierfläche (27, 28) zur Anlage an der Seitenwand (86) des Werkstücks (80) mit einer Kraftrichtung quer zur Bearbeitungsachse (63) aufweist, wobei die Spannvorrichtung (11) eine Positionierantriebsanordnung (20) zur relativen Positionierung des Werkstücks (80) und der mindestens einen Seitenwand-Positionierfläche (27, 28) quer zu Bearbeitungsachse (63) aufweist, wobei die Spannvorrichtung (11) mindestens eine Rückseitenspannfläche (143, 144) zur Anlage an der Rückseite des Werkstücks (80) und mindestens eine Vorderseitenspannfläche (43, 44) zur Anlage an der Vorderseite des Werkstücks (80) aufweist, wobei die Spannvorrichtung (11) eine Spannantriebsanordnung (40) zu einer relativen Verstellung der mindestens einen Vorderseitenspannfläche (43, 44) und der mindestens einen Rückseitenspannfläche (143, 144) in eine Spannstellung aufweist, in welcher das Werkstück (80) zur Bearbeitung durch das Bearbeitungswerkzeug (60) zwischen die mindestens eine Rückseitenspannfläche (143, 144) und die mindestens eine Vorderseitenspannfläche (43, 44) gespannt ist, wobei sie eine Steuerung aufweist, welche die Positionierantriebsanordnung (20) vor der Bearbeitung durch das Bearbeitungswerkzeug (60) zum Entfernen der mindestens einen Seitenwand-Positionierfläche (27, 28) von dem Werkstück (80) weg aus einer das Werkstück (80) stützenden Positionierstellung (P) in eine das Werkstück (80) freigebende Freigabestellung (F) ansteuert, so dass die die Aufnahme (85) begrenzende Seitenwand (86) quer zu der Bearbeitungsachse (63) durch die mindestens eine Seitenwand-Positionierfläche (27, 28) unbelastet ist, wenn das Bearbeitungswerkzeug (60) in die Aufnahme (85) eindringt, **dadurch gekennzeichnet, dass** zwischen einem Außenumfang des Bearbeitungswerkzeugs (60) und der mindestens einen Seitenwand-Positionierfläche (27, 28) in der Positionierstellung (P), wenn das Bearbeitungswerkzeug (60) entlang der Bearbeitungsachse (63) zu dem Werkstück (80) hinbewegt ist und der mindestens einen Seitenwand-Positionierfläche (27, 28) gegenüberliegt, ein Abstand entsprechend einer Stärke der Seitenwand (86) des Werkstücks (80) vorhanden ist.

2. Werkzeugmaschine nach Anspruch 1, **dadurch gekennzeichnet, dass** die mindestens eine Seitenwand-Positionierfläche (27, 28) einen Bestandteil einer Seitenwand-Positionierflächenanordnung (27, 28) mit einer ersten Seitenwand-Positionierfläche (27, 28) und mindestens einer zweiten Seitenwand-Positionierfläche (27, 28) bildet, die eine winkelige, insbesondere V-förmige oder prismatische, Aufnahme (85) begrenzen, und/oder dass mindestens zwei Seitenwand-Positionierflächen (27, 28) unabhängig voneinander durch jeweils einen Positionierantrieb (23, 24) der Positionierantriebsanordnung (20) zwischen der Freigabestellung (F) und der Positionierstellung (P) verstellbar sind.

3. Werkzeugmaschine nach Anspruch 1 oder 2, **dadurch gekennzeichnet, dass** mehrere oder alle von der mindestens einen Seitenwand-Positionierfläche (27, 28) umfassten Seitenwand-Positionierflächen (27, 28), insbesondere eine oder die erste Seitenwand-Positionierfläche (27, 28) und eine oder die zweite Seitenwand-Positionierfläche (27, 28), an einem Positionierkörper angeordnet sind, der durch einen einzigen Positionierantrieb zwischen der Freigabestellung (F) und der Positionierstellung (P) verstellbar ist.

4. Werkzeugmaschine nach einem der vorhergehenden Ansprüche, **dadurch gekennzeichnet, dass** die mindestens eine Seitenwand-Positionierfläche (27, 28) exakt zwei oder mindestens zwei Seitenwand-Positionierflächen (27, 28) umfasst und/oder dass die mindestens eine Seitenwand-Positionierfläche (27, 28) und/oder die mindestens eine Vorderseitenspannfläche (43, 44) und/oder die mindestens eine Rückseitenspannfläche (143, 144) punktförmig oder streifenförmig ist.

5. Werkzeugmaschine nach einem der vorhergehenden Ansprüche, **dadurch gekennzeichnet, dass** die Positionierantriebsanordnung (20) mindestens einen Linearantrieb zum linearen Verstellen und/oder mindestens einen Schwenkantrieb zum Verschwenken der mindestens einen Seitenwand-Positionierfläche (27, 28) zwischen der Freigabestellung (F) und der Positionierstellung (P) aufweist.

6. Werkzeugmaschine nach einem der vorhergehenden Ansprüche, **dadurch gekennzeichnet, dass** die Positionierantriebsanordnung (20) mindestens einen Zustell-Positionierantrieb (21) zum Positionieren des Werkstücks (80) zu der mindestens einen Seitenwand-Positionierfläche (27, 28) hin aufweist.

7. Werkzeugmaschine nach Anspruch 6, **dadurch gekennzeichnet, dass** der Zustell-Positionierantrieb (21) der mindestens einen Seitenwand-Positionierfläche (27, 28) gegenüberliegt und/oder dass der Zustell-Positionierantrieb (21) zur Einwirkung auf eine Seitenfläche des Werkstücks (80) vorgesehen und/oder ausgestaltet ist und/oder dass die Steuerung die Positionierantriebsanordnung (20) derart ansteuert, dass der Zustell-Positionierantrieb (21) das Werkstück (80) zu der bereits bezüglich der Bearbeitungsachse (63) vorpositionierten mindestens einen Seitenwand-Positionierfläche (27, 28) verstellt, und/oder dass die Seitenwand-Positionierflächen (27, 28) winkelig zu einer Stellachse des Zustell-Positionierantriebs (21) stehen, insbesondere V-förmig angeordnet sind, und/oder dass der Zustell-Positionierantrieb (21) eine Federanordnung (122a) zur federnden Beaufschlagung des Werkstücks (80) in Richtung der mindestens einen Seitenwand-Positionierfläche (27, 28) aufweist.

8. Werkzeugmaschine nach einem der vorhergehenden Ansprüche, **dadurch gekennzeichnet, dass** die Positionierantriebsanordnung (20) zum Positionieren des Werkstücks (80) in Richtung mindestens einer der mindestens einen Seitenwand-Positionierfläche (27, 28) gegenüberliegenden, insbesondere ortsfesten, Positionierfläche oder Anlagefläche ausgestaltet ist.

9. Werkzeugmaschine nach einem der vorhergehenden Ansprüche, **dadurch gekennzeichnet, dass** sie mindestens eine Quer-Positionierfläche (35, 36) zum Positionieren des Werkstücks (80) quer zu der Bearbeitungsachse (63) in einem Abstand zu der Seitenwand (86) und/oder der Aufnahme (85) des Werkstücks (80) aufweist, wobei vorteilhaft vorgesehen ist, dass die mindestens eine Quer-Positionierfläche (35, 36) bezüglich einer Maschinenbasis (12), insbesondere bezüglich eines Werkstückhalters (47) ortsfest ist oder durch einen Quer-Positionierantrieb (39) zwischen einer das Werkstück (80) bezüglich der Bearbeitungsachse (63) positionierenden Positionierstellung und einer das Werkstück (80) freigebenden Freigabestellung verstellbar ist und/oder dass die mindestens eine Quer-Positionierfläche (35, 36) einen Bestandteil einer Anordnung einander gegenüberliegender Quer-Positionierflächen (35, 36) bildet, zwischen denen das Werkstück (80) anordenbar ist.

10. Werkzeugmaschine nach einem der vorhergehenden Ansprüche, **dadurch gekennzeichnet, dass** keine Rückseitenspannfläche (143, 144) und Vorderseitenspannfläche (43, 44) im Bereich der Seitenwand (86) des Werkstücks (80) vorgesehen ist und/oder dass die mindestens eine Rückseitenspannfläche (143, 144) und die mindestens eine Vorderseitenspannfläche (43, 44) so angeordnet sind, dass sie ausschließlich an einem Grundkörper des Werkstücks (80) abseits der die Aufnahme (85) des Werkstücks (80) begrenzenden Seitenwand (86) des Werkstücks (80) auf das Werkstück (80) einwirken.

11. Werkzeugmaschine nach einem der vorhergehenden Ansprüche, **dadurch gekennzeichnet, dass** die Spannvorrichtung (11) mindestens eine Paarung oder exakt eine Paarung bestehend aus Rückseitenspannfläche (143, 144) und Vorderseitenspannfläche (43, 44) zum Spannen des Werkstücks (80) im Bereich der Aufnahme (85) des Werkstücks (80) oder unmittelbar an der Aufnahme (85) an einem der Seitenwand (86) gegenüberliegenden Abschnitt des Werkstücks (80) aufweist und/oder dass die Spannvorrichtung (11) derart ausgestaltet ist, dass die Seitenwand (86) des Werkstücks (80) bei der Bearbeitung durch das Bearbeitungswerkzeug (60) frei beweglich ist.

12. Werkzeugmaschine nach einem der vorhergehenden Ansprüche, **dadurch gekennzeichnet, dass** jeweils einer Rückseitenspannfläche (143, 144) eine Vorderseitenspannfläche (43, 44) unmittelbar, insbesondere in einer zu der Bearbeitungsachse (63) parallelen Achse, gegenüberliegt und/oder dass die mindestens eine Rückseitenspannfläche (143, 144) oder alle Rückseitenspannflächen (143, 144) an einem ortsfesten Werkstückhalter (47) vorgesehen ist oder sind und/oder dass die Rückseitenspannflächen (143, 144) und Vorderseitenspannflächen (43, 44) mehrere, insbesondere drei, Paarungen von Rückseitenspannfläche (143, 144) und Vorderseitenspannfläche (43, 44) vorsehen, von denen nur eine Paarung unmittelbar neben der Aufnahme (85) des Werkstücks (80) und die andere Paarung oder die anderen Paarungen in Abstand zu der Aufnahme (85) zum Spannen eines Grundkörpers des Werkstücks (80) abseits der die Aufnahme (85) des Werkstücks (80) begrenzenden Seitenwand (86) des Werkstücks (80) angeordnet sind.

13. Werkzeugmaschine nach einem der vorhergehenden Ansprüche, **dadurch gekennzeichnet, dass** die die Aufnahme (85) begrenzende Seitenwand (86) unbeeinträchtigt durch die mindestens eine Seitenwand-Positionierfläche (27, 28) quer zu der Bearbeitungsachse (63) beweglich und/oder verformbar ist, wenn das Bearbeitungswerkzeug (60) die Aufnahme (85) eindringt.

14. Werkzeugmaschine nach einem der vorhergehenden Ansprüche, **dadurch gekennzeichnet, dass** der einer Stärke der Seitenwand (86) des Werkstücks (80) entsprechende Abstand kleiner als 4 mm, insbesondere kleiner als 3 mm oder weiter vorteilhaft kleiner als 2 mm, ist.

15. Verfahren zum Betreiben einer Werkzeugmaschine mit einer Spannvorrichtung (11) für ein Werkstück (80), insbesondere für ein Motorbauteil oder Pleuel (81), und einem Bearbeitungswerkzeug (60) zur maschinellen Bearbeitung des Werkstücks (80), bei welcher das Bearbeitungswerkzeug (60) entlang einer Bearbeitungsachse (63) in eine Aufnahme (85) des Werkstücks (80) eindringt, welche sich von einer Vorderseite des Werkstücks zu einer Rückseite des Werkstücks erstreckt und durch eine Seitenwand (86) des Werkstücks begrenzt ist, wobei die Spannvorrichtung (11) mindestens eine Seitenwand-Positionierfläche (27, 28) zur Anlage an der Seitenwand (86) des Werkstücks (80) mit einer Kraftrichtung quer zur Bearbeitungsachse (63) aufweist, wobei die Spannvorrichtung (11) eine Positionierantriebsanordnung (20) zur relativen Positionierung des Werkstücks (80) und der mindestens einen Seitenwand-Positionierfläche (27, 28) quer zu Bearbeitungsachse (63) aufweist, wobei die Spannvorrichtung (11) mindestens eine Rückseitenspannfläche (143, 144) zur Anlage an der Rückseite des Werkstücks (80) und mindestens eine Vorderseitenspannfläche (43, 44) zur Anlage an der Vorderseite des Werkstücks (80) aufweist, wobei die Spannvorrichtung (11) eine Spannantriebsanordnung (40) zu einer relativen Verstellung der mindestens einen Vorderseitenspannfläche (43, 44) und der mindestens einen Rückseitenspannfläche (143, 144) in eine Spannstellung aufweist, in welcher das Werkstück (80) zur Bearbeitung durch das Bearbeitungswerkzeug (60) zwischen die mindestens eine Rückseitenspannfläche (143, 144) und die mindestens eine Vorderseitenspannfläche (43, 44) gespannt ist, wobei vorgesehen ist, dass:
vor der Bearbeitung durch das Bearbeitungswerkzeug (60) Ansteuerung der Positionierantriebsanordnung (20) zum Entfernen der mindestens einen Seitenwand-Positionierfläche (27, 28) von dem Werkstück (80) weg aus einer das Werkstück (80) stützenden Positionierstellung (P) in eine das Werkstück (80) freigebende Freigabestellung (F) durch eine Steuerung, so dass die die Aufnahme (85) begrenzende Seitenwand (86) quer zu der Bearbeitungsachse (63) durch die mindestens eine Seitenwand-Positionierfläche (27, 28) unbelastet ist, wenn das Bearbeitungswerkzeug in die Aufnahme eindringt, **dadurch gekennzeichnet, dass** zwischen einem Außenumfang des Bearbeitungswerkzeugs (60) und der mindestens einen Seitenwand-Positionierfläche (27, 28) in der Positionierstellung (P), wenn das Bearbeitungswerkzeug (60) entlang der Bearbeitungsachse (63) zu dem Werkstück (80) hinbewegt ist und der mindestens einen Seitenwand-Positionierfläche (27, 28) gegenüberliegt, ein Abstand entsprechend einer Stärke der Seitenwand (86) des Werkstücks (80) vorhanden ist.

## Claims

1. Machine tool with a workpiece (80), in particular an engine part or connecting rod (81), and with a clamping device (11) for the workpiece (80) and a machining tool (60) for machining the workpiece (80), in which the machining tool (60) advances along a machining axis (63) into a receptacle (85) of the workpiece (80), which receptacle (85) extends from a front side of the workpiece (80) to a rear side of the workpiece (80) and is bounded by a side wall (86) of the workpiece (80), wherein the clamping device (11) has at least one side wall positioning surface (27, 28) for contacting the side wall (86) of the workpiece (80) with a force direction perpendicular to the machining axis (63), wherein the clamping device (11) has a positioning drive assembly (20) for the relative positioning of the workpiece (80) and the at least one side wall positioning surface (27, 28) transversely to the machining axis (63), wherein the clamping device (11) has at least one rear side clamping surface (143, 144) for contacting the rear side of the workpiece (80) and at least one front side clamping surface (43, 44) for contacting the front side of the workpiece (80), wherein the clamping device (11) has a clamping drive assembly (40) for relatively moving the at least one front side clamping surface (43, 44) and the at least one rear side clamping surface (143, 144) into a clamping position in which the workpiece (80) is clamped between the at least one rear side clamping surface (143, 144) and the at least one front side clamping surface (43, 44) for machining by the machining tool (60), wherein it has a control which actuates the positioning drive assembly (20) before the machining by the machining tool (60) from a positioning position (P) supporting the workpiece (80) into a release position (F) releasing the workpiece (80) to remove the at least one side wall positioning surface (27, 28) from the workpiece (80), so that the side wall (86) bounding the receptacle (85) is not loaded transversely to the machining axis (63) by the at least one side wall positioning surface (27, 28) when the machining tool (60) advances into the receptacle (85), **characterised in that** there is a distance corresponding to the thickness of the side wall (86) of the workpiece (80) between an outer circumference of the machining tool (60) and the at least one side wall positioning surface (27, 28) in the positioning position (P) if the machining tool (60) is moved towards the workpiece (80) along the machining axis (63) and lies opposite the at least one side wall positioning surface (27, 28).

2. Machine tool according to claim 1, **characterised in that** the at least one side wall positioning surface (27, 28) forms a part of a side wall positioning surface assembly (27, 28) with a first side wall positioning surface (27, 28) and at least one second side wall positioning surface (27, 28), which bound an angular, in particular V-shaped or prismatic, receptacle (85), and/or **in that** the at least two side wall positioning surfaces (27, 28) can be moved independently of one another between the release position (F) and the positioning position (P) by a positioning drive (23, 24) each of the positioning drive assembly (20).

3. Machine tool according to claim 1 or 2, **characterised in that** several or all of the side wall positioning surfaces (27, 28) comprised by the at least one side wall positioning surface (27, 28), in particular one or the first side wall positioning surface (27, 28) and one or the second side wall positioning surface (27, 28), are located at a positioning body which is movable between the release position (F) and the positioning position (P) by a single positioning drive.

4. Machine tool according to any of the preceding claims, **characterised in that** the at least one side wall positioning surface (27, 28) comprises precisely two or at least two side wall positioning surfaces (27, 28), and/or **in that** the at least one side wall positioning surface (27, 28) and/or the at least one front side clamping surface (43, 44) and/or the at least one rear side clamping surface (143, 144) are/is dot-shaped or strip-shaped.

5. Machine tool according to any of the preceding claims, **characterised in that** the positioning drive assembly (20) has at least one linear drive for linear adjustment, and/or at least one swivel drive for pivoting the at least one side wall positioning surface (27, 28) between the release position (F) and the positioning position (P).

6. Machine tool according to any of the preceding claims, **characterised in that** the positioning drive assembly (20) has at least one delivery positioning drive (21) for positioning the workpiece (80) towards the at least one side wall positioning surface (27, 28).

7. Machine tool according to claim 6, **characterised in that** the delivery positioning drive (21) lies opposite the at least one side wall positioning surface (27, 28), and/or **in that** the delivery positioning drive (21) is provided and/or designed to act on a lateral surface of the workpiece (80), and/or **in that** the control actuates the positioning drive assembly (20) in such a way that the delivery positioning drive (21) moves the workpiece (80) towards the at least one side wall positioning surface (27, 28), which has already been pre-positioned with respect to the machining axis (63), and/or **in that** the wall positioning surfaces (27, 28) extend at an angle to an adjustment axis of the delivery positioning drive (21), being arranged in a V-shape in particular, and/or **in that** the delivery positioning drive (21) has a spring assembly (122a) for resiliently applying pressure to the workpiece (80) towards the at least one side wall positioning surface (27, 28).

8. Machine tool according to any of the preceding claims, **characterised in that** the positioning drive assembly (20) is designed to position the workpiece (80) towards at least one, in particular stationary, positioning surface or contact surface opposite the at least one side wall positioning surface (27, 28)..

9. Machine tool according to any of the preceding claims, **characterised in that** it has at least one transverse positioning surface (35, 36) for positioning the workpiece (80) transversely to the machining axis (63) at a distance from the side wall (86) and/or the receptacle (85) of the workpiece (80), wherein it is advantageously provided that the at least one transverse positioning surface (35, 36) is stationary with respect to a machine base (12), in particular with respect to a workpiece holder (47), or movable by a transverse positioning drive (39) between a positioning position positioning the workpiece (80) relative to the machining axis (63) and a release position releasing the workpiece (80), and/or **in that** the at least one transverse positioning surface (35, 36) forms a part of an arrangement of opposite transverse positioning surfaces (35, 36), between which the workpiece (80) can be placed.

10. Machine tool according to any of the preceding claims, **characterised in that** no rear side clamping surface (143, 144) and front side clamping surface (43, 44) is provided in the region of the side wall (86) of the workpiece (80), and/or **in that** the at least one rear side clamping surface (143, 144) and the at least one front side clamping surface (43, 44) are arranged in such a way that they act on the workpiece (80) exclusively at a base body of the workpiece (80) away from the side wall (86) of the workpiece (80) bounding the receptacle (85) of the workpiece (80).

11. Machine tool according to any of the preceding claims, **characterised in that** the clamping device (11) has at least one pairing or precisely one pairing consisting of rear side clamping surface (143, 144) and front side clamping surface (43, 44) for clamping the workpiece (80) in the region of the receptacle (85) of the workpiece (80) or directly to the receptacle (85) at a section of the workpiece (80) opposite the side wall (86), and/or **in that** the clamping device (11) is designed in such a way that the side wall (86) of the workpiece (80) is freely movable during the machining by the machining tool (60).

12. Machine tool according to any of the preceding claims, **characterised in that** a front side clamping surface (43, 44) lies opposite each rear side clamping surface (143, 144), in particular in an axis parallel to the machining axis (63), and or **in that** the at least one rear side clamping surface (143, 144) or all rear side clamping surfaces (143, 144) is/are provided at a stationary workpiece holder (47), and/or **in that** the rear side clamping surfaces (143, 144) and the front side clamping surfaces (43, 44) provide a plurality, in particular three, pairings of rear side clamping surface (143, 144) and front side clamping surface (43, 44), of which only one pairing is located directly adjacent to the receptacle (85) of the workpiece (80) and the other pairing or the other pairings is/are located at a distance from the receptacle (85) to clamp a base body of the workpiece (60) away from the side wall (86) of the workpiece (80) which bounds the receptacle (85) of the workpiece (80).

13. Machine tool according to any of the preceding claims, **characterised in that** the side wall (86) which bounds the receptacle (85) is movable and/or deformable transversely to the machining axis (63) unimpeded by the at least one side wall positioning surface (27, 28) if the machining tool (60) advances into the receptacle (85).

14. Machine tool according to any of the preceding claims, **characterised in that** the distance corresponding to a thickness of the side wall (86) of the workpiece (80) is less than 4 mm, in particular less than 3 mm and more advantageously less than 2 mm.

15. Method for operating a machine tool with a clamping device (11) for a workpiece (80), in particular an engine part or connecting rod (81), and with a machining tool (60) for machining the workpiece (80), in which method the machining tool (60) advances along a machining axis (63) into a receptacle (85) of the workpiece (80), which receptacle (85) extends from a front side of the workpiece (80) to a rear side of the workpiece (80) and is bounded by a side wall (86) of the workpiece (80), wherein the clamping device (11) has at least one side wall positioning surface (27, 28) for contacting the side wall (86) of the workpiece (80) with a force direction perpendicular to the machining axis (63), wherein the clamping device (11) has a positioning drive assembly (20) for the relative positioning of the workpiece (80) and the at least one side wall positioning surface (27, 28) transversely to the machining axis (63), wherein the clamping device (11) has at least one rear side clamping surface (143, 144) for contacting the rear side of the workpiece (80) and at least one front side clamping surface (43, 44) for contacting the front side of the workpiece (80), wherein the clamping device (11) has a clamping drive assembly (40) for relatively moving the at least one front side clamping surface (43, 44) and the at least one rear side clamping surface (143, 144) into a clamping position in which the workpiece (80) is clamped between the at least one rear side clamping surface (143, 144) and the at least one front side clamping surface (43, 44) for machining by the machining tool (60), wherein it is provided that:
before the machining by the machining tool (60), the positioning drive assembly (20) is actuated by a control to remove the at least one side wall positioning surface (27, 28) away from the workpiece (80) from a positioning position (P) supporting the workpiece (80) into a release position (F) releasing the workpiece (80), so that the side wall (86) bounding the receptacle (85) is not loaded transversely to the machining axis (63) by the at least one side wall positioning surface (27, 28) when the machining tool (60) advances into the receptacle (85), **characterised in that** there is a distance corresponding to a thickness of the side wall (86) of the workpiece (80) between an outer circumference of the machining tool (60) and the at least one side wall positioning surface (27, 28) in the positioning position (P) if the machining tool (60) is moved towards the workpiece (80) along the machining axis (63) and lies opposite the at least one side wall positioning surface (27, 28).

## Revendications

1. Machine-outil avec une pièce à usiner (80), en particulier un composant de moteur ou une bielle (81), et avec un dispositif de serrage (11) pour la pièce à usiner (80) et un outil d'usinage (60) pour l'usinage mécanique de la pièce à usiner (80), pour laquelle l'outil d'usinage (60) pénètre le long d'un axe d'usinage (63) dans un logement (85) de la pièce à usiner (80) qui s'étend depuis un côté avant de la pièce à usiner (80) à un côté arrière de la pièce à usiner (80) et est délimité par une paroi latérale (86) de la pièce à usiner (80), dans laquelle le dispositif de serrage (11) présente au moins une surface de positionnement de paroi latérale (27, 28) pour l'appui contre la paroi latérale (86) de la pièce à usiner (80) avec un sens de force transversal à l'axe d'usinage (63), dans laquelle le dispositif de serrage (11) présente un agencement d'entraînement de positionnement (20) pour le positionnement relatif de la pièce à usiner (80) et de l'au moins une surface de positionnement de paroi latérale (27, 28) transversalement à l'axe d'usinage (63), dans laquelle le dispositif de serrage (11) présente au moins une surface de serrage côté arrière (143, 144) pour l'appui contre le côté arrière de la pièce à usiner (80) et au moins une surface de serrage côté avant (43, 44) pour l'appui contre le côté avant de la pièce à usiner (80), dans laquelle le dispositif de serrage (11) présente un agencement d'entraînement de serrage (40) pour un réglage relatif d'au moins une surface de serrage côté avant (43, 44) et d'au moins une surface de serrage côté arrière (143, 144), dans une position de serrage, dans laquelle la pièce à usiner (80) est serrée pour l'usinage par l'outil d'usinage (60) entre l'au moins une surface de serrage côté arrière (143, 144) et l'au moins une surface de serrage côté avant (43, 44), dans laquelle elle présente une commande qui commande l'agencement d'entraînement de positionnement (20) avant l'usinage par l'outil d'usinage (60) pour le retrait d'au moins une surface de positionnement de paroi latérale (27, 28) loin de la pièce à usiner d'une position de positionnement (P) appuyant la pièce à usiner (80) dans une position de libération (F) libérant la pièce à usiner (80) de sorte que la paroi latérale (86) délimitant le logement (85) soit déchargée transversalement à l'axe d'usinage (63) par l'au moins une surface de positionnement de paroi latérale (27, 28) lorsque l'outil d'usinage (60) pénètre dans le logement (85), **caractérisée en ce qu'**entre une périphérie extérieure de l'outil d'usinage (60) et l'au moins une surface de positionnement de paroi latérale (27, 28) dans la position de positionnement (P) lorsque l'outil d'usinage (60) est déplacé le long de l'axe d'usinage (63) vers la pièce à usiner (80) et fait face à l'au moins une surface de positionnement de paroi latérale (27, 28), une distance correspondant à une épaisseur de la paroi latérale (86) de la pièce à usiner (80) est présente.

2. Machine-outil selon la revendication 1, **caractérisée en ce que** l'au moins une surface de positionnement de paroi latérale (27, 28) forme un constituant d'un agencement de surface de positionnement de paroi latérale (27, 28) avec une première surface de positionnement de paroi latérale (27, 28) et au moins une deuxième surface de positionnement de paroi latérale (27, 28) qui délimitent un logement (85) angulaire, en particulier en forme de V ou prismatique, et/ou qu'au moins deux surfaces de positionnement de paroi latérale (27, 28) sont réglables indépendamment l'une de l'autre par respectivement un entraînement de positionnement (23, 24) de l'agencement d'entraînement de positionnement (20) entre la position de libération (F) et la position de positionnement (P).

3. Machine-outil selon la revendication 1 ou 2, **caractérisée en ce que** plusieurs ou toutes les surfaces de positionnement de paroi latérale (27, 28) comprises par l'au moins une surface de positionnement de paroi latérale (27, 28), en particulier une ou la première surface de positionnement de paroi latérale (27, 28) et une ou la deuxième surface de positionnement de paroi latérale (27, 28), sont agencées au niveau d'un corps de positionnement qui est réglable par un entraînement de positionnement unique entre la position de libération (F) et la position de positionnement (P).

4. Machine-outil selon l'une quelconque des revendications précédentes, **caractérisée en ce que** l'au moins une surface de positionnement de paroi latérale (27, 28) comporte exactement deux ou au moins deux surfaces de positionnement de paroi latérale (27, 28) et/ou que l'au moins une surface de positionnement de paroi latérale (27, 28) et/ou l'au moins une surface de serrage côté avant (43, 44) et/ou l'au moins une surface de serrage côté arrière (143, 144) est en forme de point ou de bande.

5. Machine-outil selon l'une quelconque des revendications précédentes, **caractérisée en ce que** l'agencement d'entraînement de positionnement (20) présente au moins un entraînement linéaire pour le réglage linéaire et/ou au moins un entraînement pivotant pour le pivotement d'au moins une surface de positionnement de paroi latérale (27, 28) entre la position de libération (F) et la position de positionnement (P).

6. Machine-outil selon l'une quelconque des revendications précédentes, **caractérisée en ce que** l'agencement d'entraînement de positionnement (20) présente au moins un entraînement de positionnement d'avance (21) pour le positionnement de la pièce à usiner (80) vers l'au moins une surface de positionnement de paroi latérale (27, 28).

7. Machine-outil selon la revendication 6, **caractérisée en ce que** l'entraînement de positionnement d'avance (21) fait face à l'au moins une surface de positionnement de paroi latérale (27, 28) et/ou que l'entraînement de positionnement d'avance (21) est prévu et/ou configuré pour l'action sur une surface latérale de la pièce à usiner (80) et/ou que la commande commande l'agencement d'entraînement de positionnement (20) de telle manière que l'entraînement de positionnement d'avance (21) règle la pièce à usiner (80) vers l'au moins une surface de positionnement de paroi latérale (27, 28) déjà prépositionnée par rapport à l'axe d'usinage (63), et/ou que les surfaces de positionnement de paroi latérale (27, 28) se trouvent angulaires à un axe de réglage de l'entraînement de positionnement d'avance (21), en particulier sont agencées en forme de V, et/ou que l'entraînement de positionnement d'avance (21) présente un agencement de ressort (122a) pour l'alimentation élastique de la pièce à usiner (80) en direction d'au moins une surface de positionnement de paroi latérale (27, 28).

8. Machine-outil selon l'une quelconque des revendications précédentes, **caractérisée en ce que** l'agencement d'entraînement de positionnement (20) est configuré pour le positionnement de la pièce à usiner (80) en direction d'au moins une surface de positionnement ou surface d'appui, en particulier fixe, opposée à l'au moins une surface de positionnement de paroi latérale (27, 28).

9. Machine-outil selon l'une quelconque des revendications précédentes, **caractérisée en ce qu'**elle présente au moins une surface de positionnement transversale (35, 36) pour le positionnement de la pièce à usiner (80) transversalement à l'axe d'usinage (63) à une distance de la paroi latérale (86) et/ou du logement (85) de la pièce à usiner (80), dans laquelle il est avantageusement prévu que l'au moins une surface de positionnement transversale (35, 36) soit fixe par rapport à une base de machine (12), en particulier par rapport à un support de pièce à usiner (47) ou est réglable par un entraînement de positionnement transversal (39) entre une position de positionnement positionnant la pièce à usiner (80) par rapport à l'axe d'usinage (63) et une position de libération libérant la pièce à usiner (80) et/ou que l'au moins une surface de positionnement transversale (35, 36) forme un constituant d'un agencement de surfaces de positionnement transversales (35, 36) opposées l'une à l'autre, entre lesquelles la pièce à usiner (80) peut être agencée.

10. Machine-outil selon l'une quelconque des revendications précédentes, **caractérisée en ce qu'**aucune surface de serrage côté arrière (143, 144) et surface de serrage côté avant (43, 44) n'est prévue dans la zone de la paroi latérale (86) de la pièce à usiner (80) et/ou que l'au moins une surface de serrage côté arrière (143, 144) et l'au moins une surface de serrage côté avant (43, 44) sont agencées de sorte qu'elles agissent sur la pièce à usiner (80) exclusivement au niveau d'un corps de base de la pièce à usiner (80) à l'écart de la paroi latérale (86) de la pièce à usiner (80) délimitant le logement (85) de la pièce à usiner (80).

11. Machine-outil selon l'une quelconque des revendications précédentes, **caractérisée en ce que** le dispositif de serrage (11) présente au moins un appariement ou exactement un appariement se composant d'une surface de serrage côté arrière (143, 144) et d'une surface de serrage côté avant (43, 44) pour le serrage de la pièce à usiner (80) dans la zone du logement (85) de la pièce à usiner (80) ou directement au niveau du logement (85) sur une section opposée à la paroi latérale (86) de la pièce à usiner (80) et/ou que le dispositif de serrage (11) est configuré de telle manière que la paroi latérale (86) de la pièce à usiner (80) soit librement mobile lors de l'usinage par l'outil d'usinage (60).

12. Machine-outil selon l'une quelconque des revendications précédentes, **caractérisée en ce qu'**une surface de serrage côté avant (43, 44) directement, en particulier dans un axe parallèle à l'axe d'usinage (63) fait face respectivement à une surface de serrage côté arrière (143, 144), et/ou que l'au moins une surface de serrage côté arrière (143, 144) ou toutes les surfaces de serrage côté arrière (143, 144) est ou sont prévues au niveau d'un support de pièces à usiner (47) fixe et/ou que les surface de serrage côté arrière (143, 144) et les surfaces de serrage côté avant (43, 44) prévoient plusieurs, en particulier trois, appariements de surface de serrage côté arrière (143, 144) et surface de serrage côté avant (43, 44), dont seul un appariement est agencé directement à côté du logement (85) de la pièce à usiner (80) et l'autre appariement ou les autres appariements sont agencés à distance du logement (85) pour le serrage d'un corps de base de la pièce à usiner (80) à l'écart de la paroi latérale (86) de la pièce à usiner (80) délimitant le logement (85) de la pièce à usiner (80).

13. Machine-outil selon l'une quelconque des revendications précédentes, **caractérisée en ce que** la paroi latérale (86) délimitant le logement (85) est mobile et/ou déformable de manière intacte par l'au moins une surface de positionnement de paroi latérale (27, 28) transversalement à l'axe d'usinage (63) lorsque l'outil d'usinage (60) pénètre le logement (85).

14. Machine-outil selon l'une quelconque des revendications précédentes, **caractérisée en ce que** la distance correspondant à une épaisseur de la paroi latérale (86) de la pièce à usiner (80) est inférieure à 4 mm, en particulier inférieure à 3 mm ou encore avantageusement inférieure à 2 mm.

15. Procédé de fonctionnement d'une machine-outil avec un dispositif de serrage (11) pour une pièce à usiner (80), en particulier pour un composant de moteur ou une bielle (81), et un outil d'usinage (60) pour l'usinage mécanique de la pièce à usiner (80), pour lequel l'outil d'usinage (60) pénètre le long d'un axe d'usinage (63) dans un logement (85) de la pièce à usiner (80) qui s'étend depuis un côté avant de la pièce à usiner à un côté arrière de la pièce à usiner et est délimité par une paroi latérale (86) de la pièce à usiner, dans lequel le dispositif de serrage (11) présente au moins une surface de positionnement de paroi latérale (27, 28) pour l'appui contre la paroi latérale (86) de la pièce à usiner (80) avec un sens de force transversal à l'axe d'usinage (63), dans lequel le dispositif de serrage (11) présente un agencement d'entraînement de positionnement (20) pour le positionnement relatif de la pièce à usiner (80) et de l'au moins une surface de positionnement de paroi latérale (27, 28) transversalement à l'axe d'usinage (63), dans lequel le dispositif de serrage (11) présente au moins une surface de serrage côté arrière (143, 144) pour l'appui contre le côté arrière de la pièce à usiner (80) et au moins une surface de serrage côté avant (43, 44) pour l'appui contre le côté avant de la pièce à usiner (80), dans lequel le dispositif de serrage (11) présente un agencement d'entraînement de serrage (40) pour un réglage relatif d'au moins une surface de serrage côté avant (43, 44) et de l'au moins une surface de serrage côté arrière (143, 144) dans une position de serrage, dans laquelle la pièce à usiner (80) est serrée pour l'usinage par l'outil d'usinage (60) entre l'au moins une surface de serrage côté arrière (143, 144) et l'au moins une surface de serrage côté avant (43, 44), dans lequel il est prévu que :
avant l'usinage par l'outil d'usinage (60), la commande de l'agencement d'entraînement de positionnement (20) pour le retrait d'au moins une surface de positionnement de paroi latérale (27, 28) loin de la pièce à usiner (80) d'une position de positionnement (P) appuyant la pièce à usiner (80) dans une position de libération (F) libérant la pièce à usiner (80) par une commande de sorte que la paroi latérale (86) délimitant le logement (85) soit déchargée transversalement à l'axe d'usinage (63) par l'au moins une surface de positionnement de paroi latérale (27, 28) lorsque l'outil d'usinage pénètre dans le logement, **caractérisé en ce qu'**une distance correspondant à une épaisseur de la paroi latérale (86) de la pièce à usiner (80) est prévue entre une périphérie extérieure de l'outil d'usinage (60) et l'au moins une surface de positionnement de paroi latérale (27, 28) dans la position de positionnement (P), lorsque l'outil d'usinage (60) est déplacé le long de l'axe d'usinage (63) vers la pièce d'usinage (80) et fait face à l'au moins une surface de positionnement de paroi latérale (27, 28).
